# EUROPEAN PATENT APPLICATION

(11) **EP 3 252 136 A1**
(43) Date of publication of application: **06.12.2017**
(21) Application number: 16172549.4
(22) Date of filing: 01.06.2016
(51) Int. Cl.: C12G 3/08, C12G 3/10, C12C 11/11, C12C 11/00

(54) **PROCESS OF PREPARING A MALT-BASED BEVERAGE**

(71) Applicant: Anheuser-Busch InBev S.A., 1000 Brussels (BE)
(72) Inventor: The designation of the inventor has not yet been filed
(74) Representative: BiiP cvba

(57) **Abstract**

A process of preparing a malt-based beverage comprising at least two flavour components A and B in a weight ratio A/B of X_{final}, said method comprising the steps of:
- brewing and fermenting a wort to obtain a fermented malt-based beverage comprising at least two water-soluble components A and B, ohter than alcohol or water, in a weight ratio A/B of X₁ >X_{final};
- adjusting the weight ratio of A/B at concentrating said fermented malt-based beverage by removal of water therefrom to obtain a concentrated malt-based beverage having a weight ration A/B of X_{final};
characterized in that the ratio A/B of X₁ is determined in anticipation of adjusting the amount of component A in the beverage during concentrating.

## Description

### Technical Field

The present invention concerns a process of preparing a malt-based beverage, in particular a malt-based beverage concentrate to be diluted prior to consumption.

### Background for the Invention

Beer brewing is a traditional rather conservative craft business currently facing the challenge of providing a wide variety of beer types and beer derivates. In order to provide such variety, one could plan brewing several types of beer in the brewery, however, changing the beer type brewed in a brewing facility requires extensive hand labour in terms of planning, cleaning and restarting the brewery, thereby loosing precious time and reducing the total efficiency of the brewery. Just starting a new brewing facility is even more challenging due to the high capital expenses.

Therefore, several brewers recently started investigating the potential of mixing one or more beer types or mixing a rather neutral base beer with a concentrated flavour compound. (eg Pichia) Another option to provide a large variety of beer taste and types is providing a beer concentrate and flavour concentrates that can be mixed and diluted at the place of consumption to the desire of the customer.

Concentrating beer however has proven to be difficult, especially in terms of providing a beer concentrate that can be reconstituted to a beer having a specific desired organoleptic signature highly appreciated by the beer connaisseurs.

Indeed, during concentration some of the beer flavours are lost or altered, thereby affecting the beer's signature. To overcome this, it is known to add some chemical flavour compouds post fermentation and maturation to mimic the desired beer signature, however such chemical addition can not be regarded as a brewer's craftmanship and can not recreate the ultimate organoleptic spectrum characteristic of desired beers. Alternatively, it is known to overdose hops in concentrated beers to mask potential taste defects in the beer, however such method is not convenient as the hop flavours also mask the desired flavours and definitely alters the beer's signature.

It is therefore clear that there remains a market need for providing a wide variety of beer types with a full organoleptic spectrum and without huge expansion of the beer brewing facilities.

The current invention aims at that market need by providing a process A process of preparing a malt-based beverage comprising at least two flavour components A and B in a weight ratio A/B of X_{final}, said method comprising the steps of:
- brewing and fermenting a wort to obtain a fermented malt-based beverage comprising at least two water-soluble components A and B, other than alcohol or water, in a weight ratio A/B of X₁ > X_{final};
- adjusting the weight ratio of A/B at concentrating said fermented malt-based beverage by removal of water therefrom to obtain a concentrated malt-based beverage having a weight ration A/B of X_{final};
characterized in that the ratio A/B of X₁ is determined in anticipation of adjusting the amount of component A in the beverage during concentrating.

### Summary of the Invention

The concentration step preferably comprises one or more of freeze concentration, concentration by reverse osmosis, nanofiltration, ultrafiltration or distillation.

In some embodiments, the concentration step involves a 2-step concentration comprising a first concentration by filtration, resulting a in concentrated retentate and a permeate; and a second concentration step removing water from the permeate thereby obtaining a concentrated alcohol containing fraction to be added with the retentate of the first concentration step prior to dilution, during dilution or after dilution to obtain the malt-based beverage.

Component A preferably has an average mean size of 150Da or smaller and preferably has a boiling point of 100°C or higher.

Component A can be chosen of one of: an ester, iso-alfa acid, dymethylsulfide, wherein said ester is preferably chosen from the group of: ethylformate, n-amyl acetate, isoamyl acetate, isobutyl propionate, methyl butyrare, ethyl butyrate, n-butyl butyrate, n-amyl butyrate, isoamyl valerate, methyl salicylate and/or combinations thereof. Isoamylacetate being a preferred component A.

Component B preferably is maltotetraose.

The fermented malt-based beverage preferably has an extract level A_{fermented} in a range of 10°P - 20°P.

Preferably, the method according to the invention includes a step of diluting the concentrated malt-based beverage by the addition of diluent, the diluent preferably being water and used in an amount for dilution of the concentrated malt-based beverage to obtain a beverage having an extract level A_{beverage} in a range of 8°P - 20°P equal or smaller than the extract level of the fermented beverage before concentration.

### Definitions

As used herein, the term "concentrate" is given the definition of Oxford dictionary: "A substance made by removing or reducing the diluting agent; a concentrated form of something" (cf. http://www.oxforddictionaries.com/definition/english/concentrate). In line with this, the term "beer or cider concentrate" or, alternatively "(concentrated) beer or cider base" or "beer or cider syrup", is meant to relate to beer or cider, respectively which had the majority of its solvent component - i.e. water - removed, while retaining most of the dissolved components conferring such features as taste, smell, colour, mouthfeel etc.

As used herein, the term "beer" is to be construed according to a rather broad definition:
"the drink obtained by fermenting from a wort, prepared with starchy or sugary raw materials, including hop powder or hop extracts and drinkable water. Aside from barley malt and wheat malt, only the following may be considered for brewing, mixed with e.g. wheat malt, starchy or sugary raw materials in which the total quantity may not exceed 80%, preferably 40% of the total weight of the starchy or sugary raw materials:
   (a) maize, rice, sugar, wheat, barley and the various forms of them.
   (b) saccharose, converted sugar, dextrose and glucose syrup.

A used herein, the term "water soluble" is to be construed as a component that is soluble in water at least in an amount that it is present in the beverage.

Although according to certain national legislations, not all fermented malt-based beverages can be called beer, in the context of the present invention, the term "beer" and "fermented malt based beverage" are used herein as synonyms and can be interchanged. It follows, that as used herein the terms "reconstituted beer" and "reconstituted fermented malt based beverage" are to be understood as beverages composition-wise substantially identical to beer but obtained by addition of the solvent, i.e. water or carbonated water, to a previously prepared beer concentrate.

Next, as used herein, the term "cider" is to be understood as every alcoholic beverage resulting from the fermentation of apple juice or apple juice mixed with up to 10% pear juice. This term also encompasses the any product of this fermented apple juice further modified by adding such standard cider manufacturing additives as acids (citric or tartaric) and/or sugar, filtering, cooling, saturating with carbon dioxide, pasteurizing, etc., which is commercialized under the term cider.

As used herein the term "flavour components" shall be understood as any of the substances comprised in beer that contribute to its complex olfactory profile, with the exception of water and alcohol, or that can be considered as off-flavours. Examples of beer flavour components include but are not limited to esters, such as ethylformate, n-amyl acetate, isoamyl acetate, isobutyl propionate, methyl butyrare, ethyl butyrate, n-butyl butyrate, n-amyl butyrate, isoamyl valerate, methyl salicylate and/or combinations thereof and iso-alfa acids. An example of an off-flavour is dimethylsulfide the concentration of which should be kept below a treshhold value.

### Detailed Description of a Preferred Embodiment

The present invention concerns a process of preparing a malt-based beverage, the process comprising the steps of brewing a wort, preferably based on malt-based mash, boiling said wort and subsequently fermenting the wort. After fermentation the fermented broth is filtered and subsequently stabilized (eg with PVPP or kieselguhr) to obtain the fermented beverage.

The fermented beverage comprises at least two water-soluble components A and B, other than alcohol or water, in a weight ratio A/B of X₁, whereby component A preferably has an average mean size of 150Da or less such as one of: an ester, dimethylsulfide or an iso-alfa acid and the component B is a component having an average means size of larger than 150Da such as maltotetraose. Ther fermented beverage preferably has an real extract level of between 10°Plato and 20°Plato.

Following the stabilisation, the fermented beverage is concentrated, i.e. water is removed from the beverage, thereby concentrating the component B, for example at least 3 times, preferably at least 4 times or even up to 6 times or more in comparison with the fermented beverage after stabilisation.

According to the invention the ratio X₁ of the weight in which components A/B are present in the fermented beverage is adjusted during the concentration step to a ratio X_{final}. In practice, X_{final} will be smaller than X1 as during concentration, a fraction of the component A in the beverage will be allowed to be removed together with the water. Such removal during concentration allows for tweaking the brewing and fermentation of the malt-based beverage to allow a more cost-efficient brewing and fermentation process. As an example, adjusting the amount of dimethylsuflide (DMS) in the fermented beverage, by allowing selective removal of DMS together with water during for example a nanofiltration step allows reducing the boiling time of the wort, as in brewing of regular beer, DMS is removed during boiling and the boiling of the wort will only be stopped once the DMS levels are below a given threshold value. Experiments have shown that with nanofiltration, the DMS level in the beer can be reduced with about 91% for Stella Artois and with about 83% for Leffe, whilst with a concentration step comprising freeze concentration the DMS levels can be reduced by about 27% (weight%) for Stella Artois and about1 5% for Leffe.

According to another example, the fermentation conditions can be altered by applying more stress on the yeast (less stringent temperature conditions during fermentation), resulting in a malt-based beverage having a higher concentration of esters such as eg. ethylformate, n-amyl acetate, isoamyl acetate, isobutyl propionate, methyl butyrare, ethyl butyrate, n-butyl butyrate, n-amyl butyrate, isoamyl valerate, methyl salicylate and/or combinations thereof. During the total weight amount of eg isoamylacetate can be lowered by 15% (weight%) for Stella Artois when using freeze concentration and even up to 60% (weight%) with nanofiltration, whilst for Leffe, the isoamylacetate can be lowered by 11% by freeze concentration and by 60% with nanofiltration.

The amount of maltotetraose is not or only in a very limited amount affected by the concentration of the malt-based beverage. As such the ratio A/B is adjusted during concentration to a level X_{final} lower than X₁.

After concentration the malt-based beverage is preferably packed in packaging providing adequate gas and light barrier properties. And for consumption, the malt based beverage concentrate is preferably rediluted, either with water or another liquid (alcohol, beer, cider, ...) to obtain a malt-based beverage having a ratio of A/B of X_{final}. The amount of diluent is hereby prefarbly chosen to match or to be slightly lower than the amount of water removed during concentration. The real extract level of the final malt based beverage preferably ranging between 8°Plato and 20°Plato.

The diluent may optionally have CO₂, N₂ or N₂O dissolved therein.

The method of concentration of the fermented malt-based beverage is preferably one or more of freeze concentration, concentration by reverse osmosis, nanofiltration, ultrafiltration or distillation.

A preferred method for obtaining a concentration level of 6x or more concerns a 2-step concentration method, said method comprising the steps of:
a) Subjecting beer or cider to a first concentration step comprising nanofiltration or reverse osmosis to obtain a retentate and a fraction comprising alcohol and volatile flavour components, wherein the retentate is characterised by the concentration of unfilterable compounds equal to or higher than 20% (w/w), preferably 30% (w/w), most preferably 40% (w/w), as calculated from density measurement corrected for the alcohol amount;
b) Subjecting the fraction comprising alcohol and volatile flavour components to a next concentration step comprising freeze concentration, distillation, fractionation, or reverse osmosis, to obtain a concentrated fraction comprising alcohol and volatile flavour components and a leftover fraction;
c) Combining the retentate from a) with the concentrated fraction comprising alcohol and volatile flavour components from b) to obtain the beer concentrate.

In a particular embodiment, the method for preparing alcohol-enriched beer concentrate, said method comprising the steps of:
a) Subjecting beer or cider to a first concentration step comprising nanofiltration to obtain a retentate and a fraction comprising alcohol and volatile flavour components, wherein the retentate is characterised by the concentration of unfilterable compounds equal to or higher than 30% (w/w), preferably 35% (w/w), most preferably 40% (w/w), as calculated from density measurement corrected for alcohol amount;
b) Subjecting the fraction comprising alcohol and volatile flavour components to a next concentration step comprising freeze concentration, distillation, fractionation, or reverse osmosis, to obtain a concentrated fraction comprising alcohol and volatile flavour components and a leftover fraction;
c) Combining the retentate from a) with the concentrated fraction comprising alcohol and volatile flavour components from b) to obtain the beer concentrate.

In some cases it is desired to store the retentate and concentrated fraction comprising alcohol separately until redilution of the beer, in such instance the ratio Xfinal is the one measured after recombining the retentate and the concentrated fraction comprising alcohol together with a diluent.

## Claims

1. A process of preparing a malt-based beverage comprising at least two flavour components A and B in a weight ratio A/B of X_{final}, said method comprising the steps of:
- brewing and fermenting a wort to obtain a fermented malt-based beverage comprising at least two water-soluble components A and B, ohter than alcohol or water, in a weight ratio A/B of X₁ > X_{final};
- adjusting the weight ratio of A/B at concentrating said fermented malt-based beverage by removal of water therefrom to obtain a concentrated malt-based beverage having a weight ration A/B of X_{final};
**characterized in that** the ratio A/B of X₁ is determined in anticipation of adjusting the amount of component A in the beverage during concentrating.

2. The process according to claim 1, the concentration step comprising one or more of freeze concentration, concentration by reverse osmosis, nanofiltration, ultrafiltration or distillation.

3. The process according to claim 1, the concentration step comprising a 2-step concentration comprising a first concentration by filtration, resulting a in concentrated retentate and a permeate; and a second concentration step removing water from the permeate thereby obtaining a concentrated alcohol containing fraction to be added with the retentate of the first concentration step prior to dilution, during dilution or after dilution to obtain the malt-based beverage.

4. The process according to any of the preceding claims, said component A having an average mean size of 150Da or smaller.

5. The process according to any of the preceding claims, said component A having a boiling point of 100°C or higher.

6. The process according to any of claim 1, said component A being one of: an ester, iso-alfa acid, dymethylsulfide.

7. The process according to claim 6, said ester being chosen from the group of: ethylformate, n-amyl acetate, isoamyl acetate, isobutyl propionate, methyl butyrare, ethyl butyrate, n-butyl butyrate, n-amyl butyrate, isoamyl valerate, methyl salicylate and/or combinations thereof.

8. The process according to claim 1, the concentration step concerning a concentration of the beverage solids by a factor of at least 3x, preferably at least 4x and most preferably at least 6x in view of the fermented malt-based beverage prior to concentration.

9. The process according to claim 1, said component B being maltotetraose.

10. The process according to claim 1, the fermented malt-based beverage having an extract level A_{fermented} in a range of 10°P - 20°P.

11. The process according to claim 1, comprising the step of diluting the concentrated malt-based beverage by the addition of diluent.

12. The process according to claim 11, comprising selecting the amount of diluent for dilution of the concentrated malt-based beverage to obtain a beverage having an extract level A_{beverage} in a range of 8°P - 20°P.

13. The process according to claim 12, the extract level A_{beverage} being smaller than or equal to A_{fermented}.

14. The process according to any of claims 10 to 12, the diluent being water.

15. The process according to any of claims 10-14, the diluent comprising CO₂, N₂ or N₂O dissolved therein.
